(19) **Europäisches Patentamt / European Patent Office / Office européen des brevets**

(11) **EP 4 319 131 A1**

(12) # EUROPEAN PATENT APPLICATION
published in accordance with Art. 153(4) EPC

(43) Date of publication:
**07.02.2024 Bulletin 2024/06**

(21) Application number: **22774628.6**

(22) Date of filing: **25.01.2022**

(51) International Patent Classification (IPC):
*H04N 5/232* (2006.01)    *G03B 15/00* (2021.01)
*G03B 17/18* (2021.01)    *G03B 17/24* (2021.01)
*G06T 5/00* (2024.01)    *G06T 7/194* (2017.01)
*G06T 7/70* (2017.01)    *H04N 5/77* (2006.01)
*H04N 5/92* (2006.01)

(52) Cooperative Patent Classification (CPC):
**G03B 15/00; G03B 17/18; G03B 17/24; G06T 5/00; G06T 7/194; G06T 7/70; H04N 5/77; H04N 5/92; H04N 23/60;** G06V 20/70

(86) International application number:
**PCT/JP2022/002504**

(87) International publication number:
**WO 2022/201826 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021 JP 2021053269**

(71) Applicant: **Sony Group Corporation
Tokyo 108-0075 (JP)**

(72) Inventors:
- **TAHARA Daisuke
  Tokyo 108-0075 (JP)**
- **KAMIYA Koji
  Tokyo 108-0075 (JP)**
- **NAKASUJI Motohiro
  Tokyo 108-0075 (JP)**

(74) Representative: **2SPL Patentanwälte PartG mbB
Landaubogen 3
81373 München (DE)**

(54) **INFORMATION PROCESSING SYSTEM, INFORMATION PROCESSING METHOD, AND INFORMATION PROCESSING DEVICE**

(57) The present technology relates to an information processing system, an information processing method, and an information processing device that enable effective use of a result of recognition processing on a captured image by the information processing device that controls an imaging device.

An information processing system includes: an imaging device that captures a captured image; and an information processing device that controls the imaging device. The information processing device includes: a recognition unit that performs recognition processing on the captured image; a recognition metadata generation unit that generates recognition metadata including data based on a result of the recognition processing; and an output unit that outputs the recognition metadata to the imaging device. The present technology can be applied to a system including a camera and a CCU (Camera Control Unit), for example.

EP 4 319 131 A1

Fig. 1

## Description

[Technical Field]

The present technology relates to an information processing system, an information processing method, and an information processing device. In particular, the present technology relates to an information processing system, an information processing method, and an information processing device suitable for use when an information processing device that controls an imaging device performs recognition processing on a captured image.

[Background Art]

Conventionally, a system has been proposed that includes a CCU (Camera Control Unit) that performs recognition processing on an image captured by a camera (see PTL 1 and PTL 2, for example).

[Citation List]

[Patent Literature]

[PTL 1]
JP 2020-141946A
[PTL 2]
JP 2020-156860A

[Summary]

[Technical Problem]

However, in the inventions described in PTL 1 and PTL 2, the result of recognition processing is used within the CCU, but the use of the result of recognition processing outside the CCU is not considered.

The present technology has been made in view of such circumstances, and enables effective use of the result of recognition processing on a captured image by an information processing device that controls an imaging device.

[Solution to Problem]

An information processing system according to a first aspect of the present technology an imaging device that captures a captured image; and an information processing device that controls the imaging device, wherein the information processing device includes: a recognition unit that performs recognition processing on the captured image; a recognition metadata generation unit that generates recognition metadata including data based on a result of the recognition processing; and an output unit that outputs the recognition metadata to the imaging device.

In the first aspect of the present technology, recognition processing is performed on a captured image, recognition metadata including data based on the result of the recognition processing is generated, and the recognition metadata is output to an imaging device.

An information processing method according to a second aspect of the present technology allows an information processing device that controls an imaging device that captures a captured image to execute: performing recognition processing on the captured image; generating recognition metadata including data based on a result of the recognition processing; and outputting the recognition metadata to the imaging device.

In the second aspect of the present technology, recognition processing is performed on a captured image, recognition metadata including data based on the result of the recognition processing is generated, and the recognition metadata is output to the imaging device.

An information processing system according to a third aspect of the present technology includes an imaging device that captures a captured image; and an information processing device that controls the imaging device, wherein the information processing device includes: a recognition unit that performs recognition processing on the captured image; a recognition metadata generation unit that generates recognition metadata including data based on a result of the recognition processing; and an output unit that outputs the recognition metadata to a device in a subsequent stage.

In the third aspect of the present technology, recognition processing is performed on a captured image, recognition metadata including data based on the result of the recognition processing is generated, and the recognition metadata is output to a device in a subsequent stage.

An information processing method according to a fourth aspect of the present technology allows an information processing device that controls an imaging device that captures a captured image to execute: performing recognition processing on the captured image; generating recognition metadata including data based on a result of the recognition processing; and outputting the recognition metadata to a device in a subsequent stage.

In the fourth aspect of the present technology, recognition processing is performed on a captured image, recognition metadata including data based on the result of the recognition processing is generated, and the recognition metadata is output to a device in a subsequent stage.

An information processing device according to a fifth aspect of the present technology includes a recognition unit that performs recognition processing on a captured image captured by an imaging device; a recognition metadata generation unit that generates recognition metadata including data based on a result of the recognition processing; and an output unit that outputs the recognition metadata.

In the fifth aspect of the present technology, recognition processing is performed on a captured image captured by an imaging device, recognition metadata including data based on the result of the recognition processing is generated, and the recognition metadata is output.

[Brief Description of Drawings]

[Fig. 1]

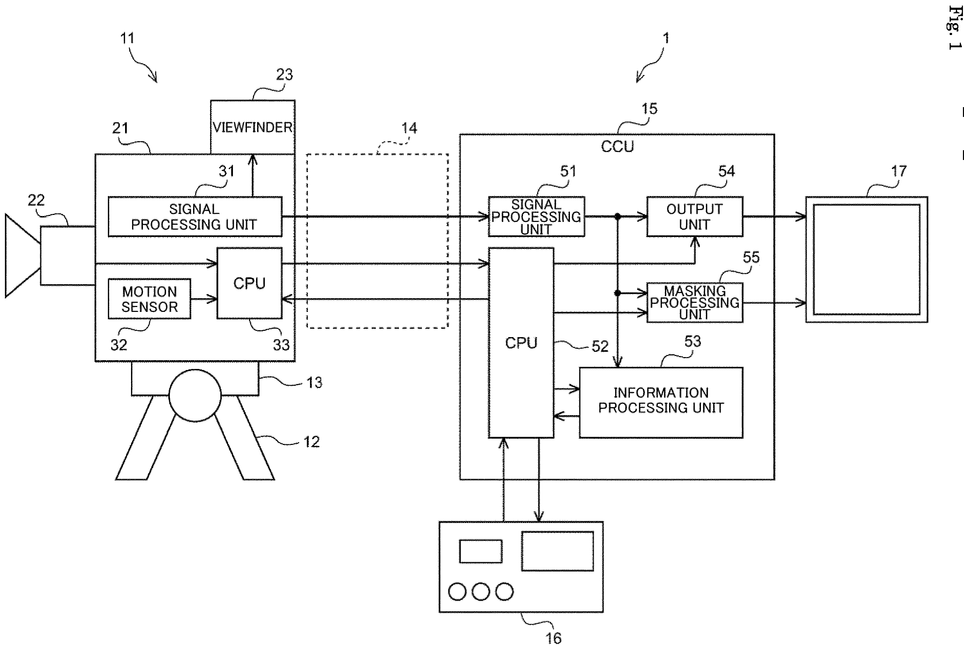

Fig. 1 is a block diagram showing an embodiment of an information processing system to which the present technology is applied.
[Fig. 2]

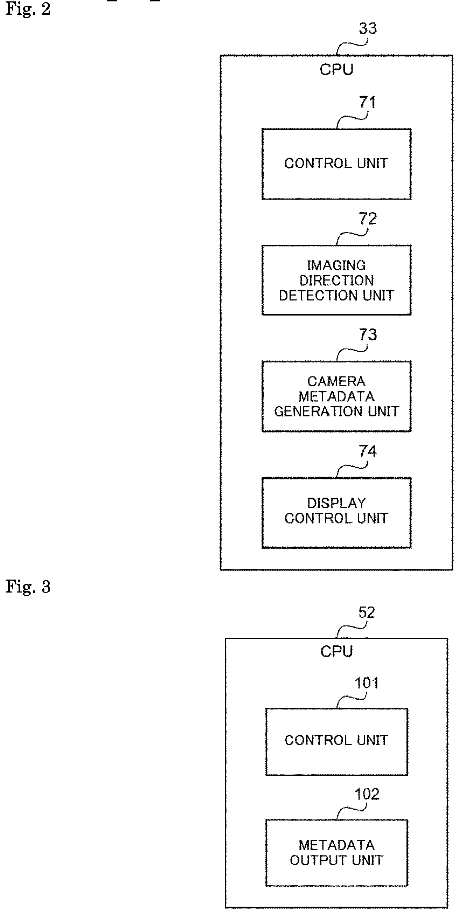

Fig. 2 is a block diagram showing a functional configuration example of a CPU of a camera.
[Fig. 3]
Fig. 3 is a block diagram showing a functional configuration example of a CPU of a CCU.
[Fig. 4]

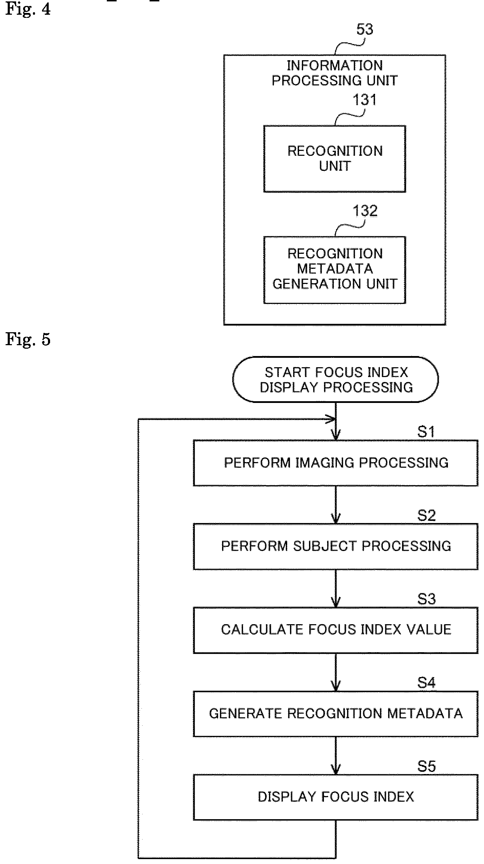

Fig. 4 is a block diagram showing a functional configuration example of an information processing unit of the CCU.
[Fig. 5]
Fig. 5 is a flowchart for explaining focus index display processing.
[Fig. 6]

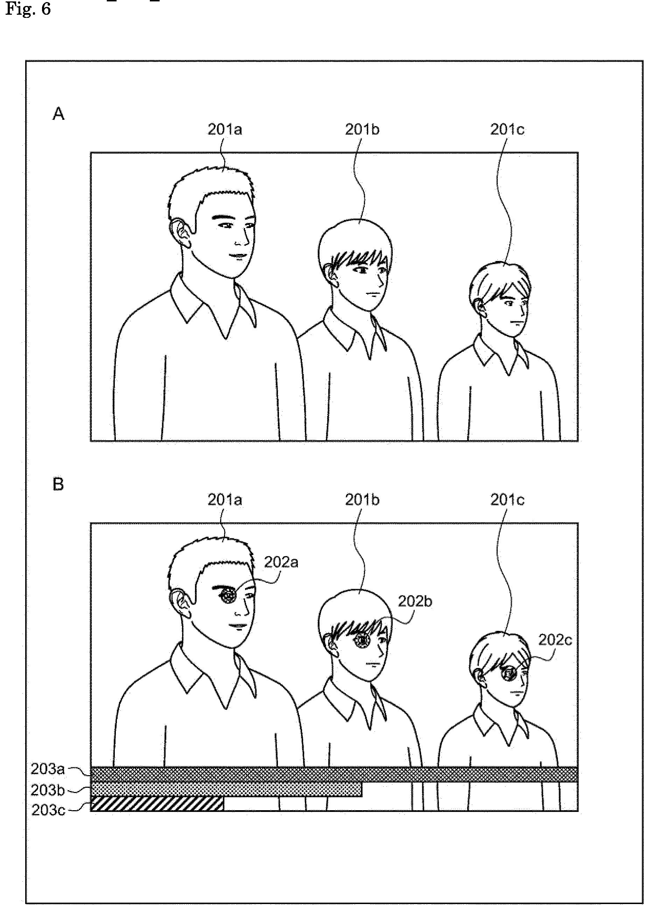

Fig. 6 is a diagram showing an example of focus index display.
[Fig. 7]

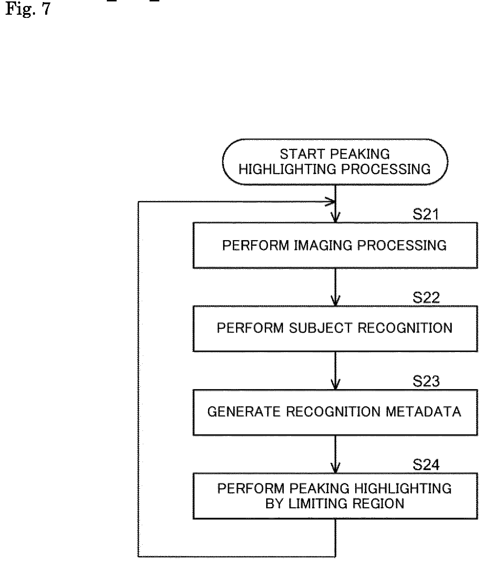

Fig. 7 is a flowchart for explaining peaking highlighting processing.
[Fig. 8]

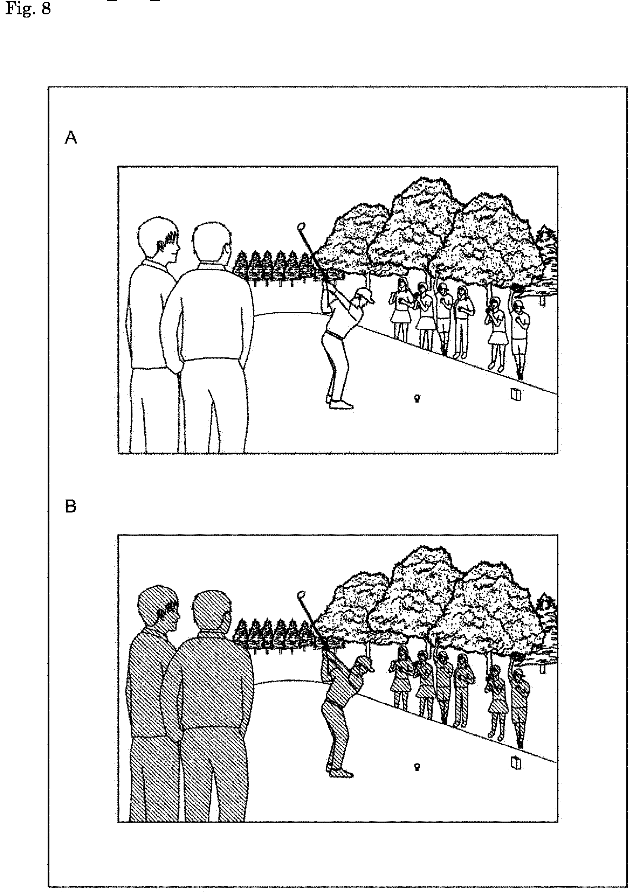

Fig. 8 is a diagram showing an example of peaking highlighting.
[Fig. 9]

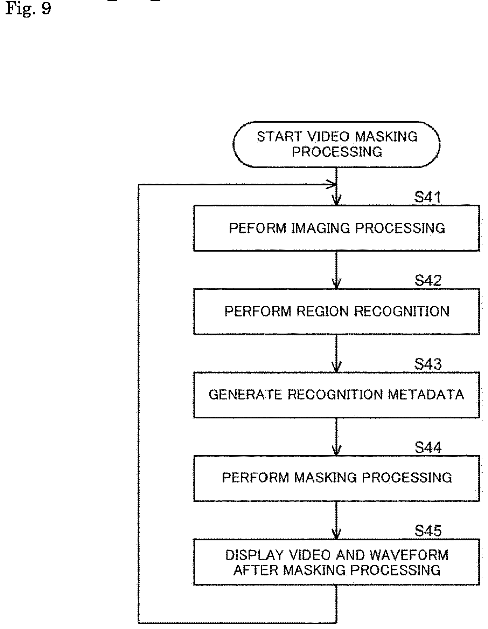

Fig. 9 is a flowchart for explaining video masking processing.
[Fig. 10]

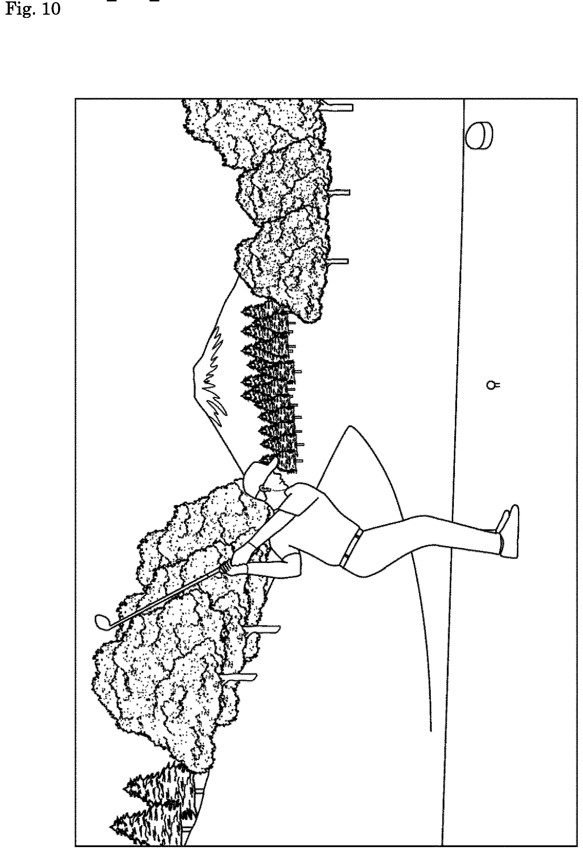

Fig. 10 is a diagram showing an example of a video frame.
[Fig. 11]

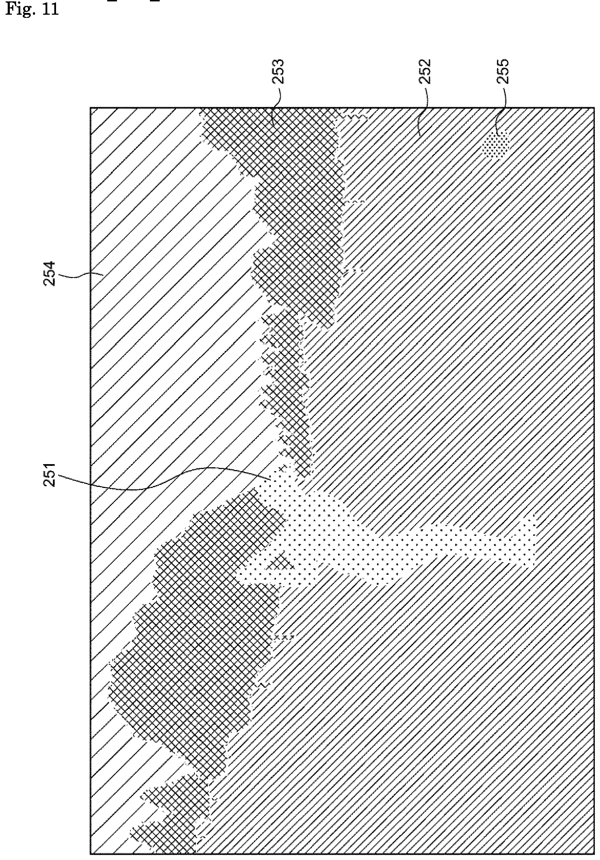

Fig. 11 is a diagram showing an example of region recognition.
[Fig. 12]

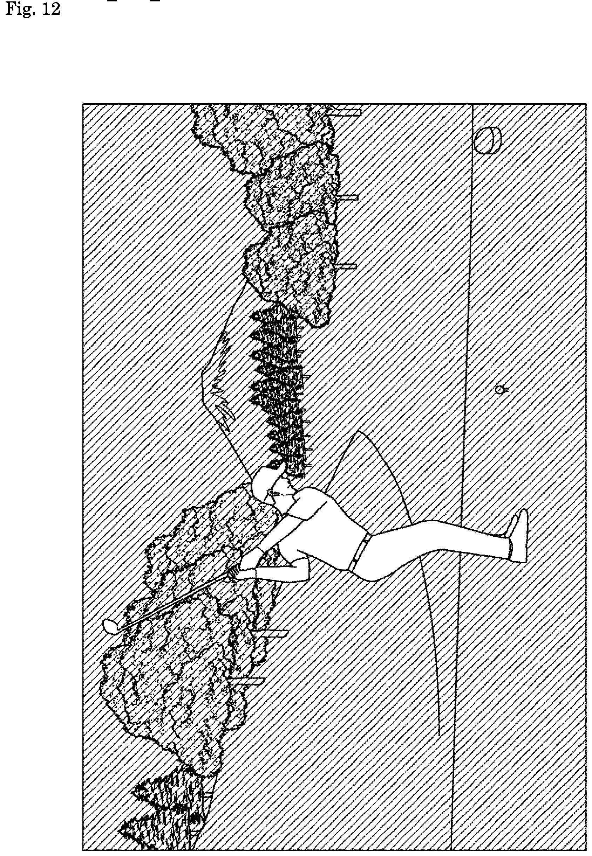

Fig. 12 is a diagram for explaining masking processing.
[Fig. 13]

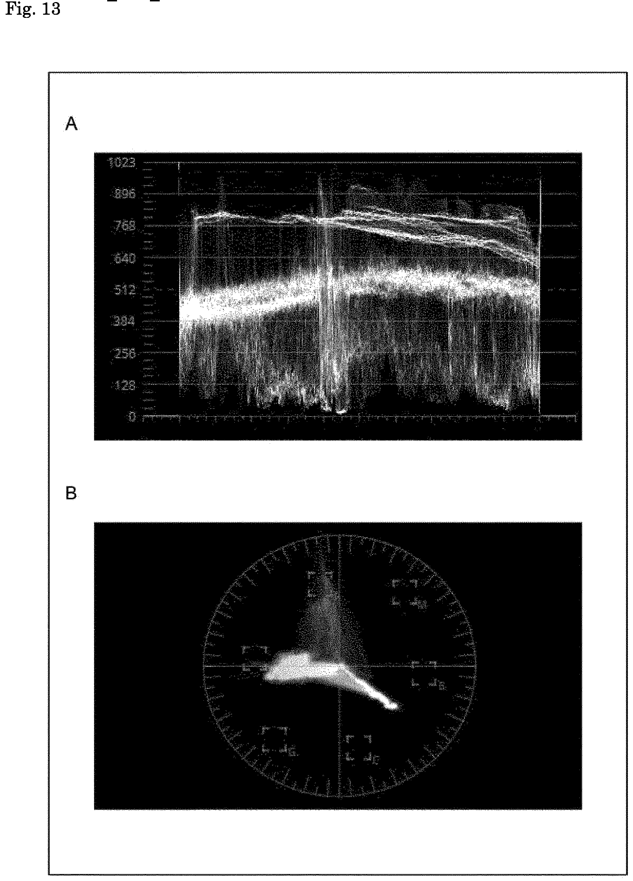

Fig. 13 is a diagram showing a display example of a luminance waveform of a video frame before masking processing and a vectorscope.
[Fig. 14]

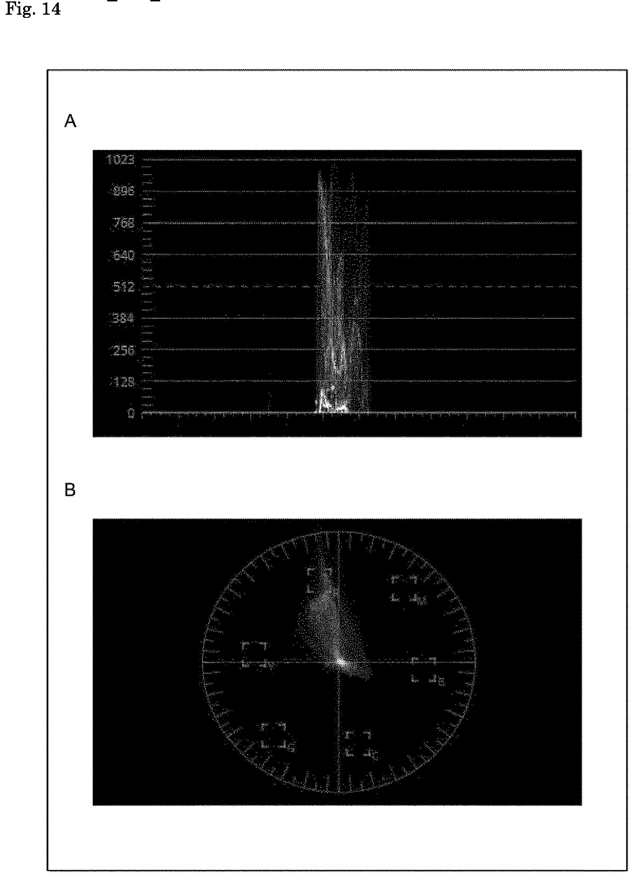

Fig. 14 is a diagram showing a display example of a luminance waveform and a vectorscope of a video frame after masking processing of a first method.
[Fig. 15]

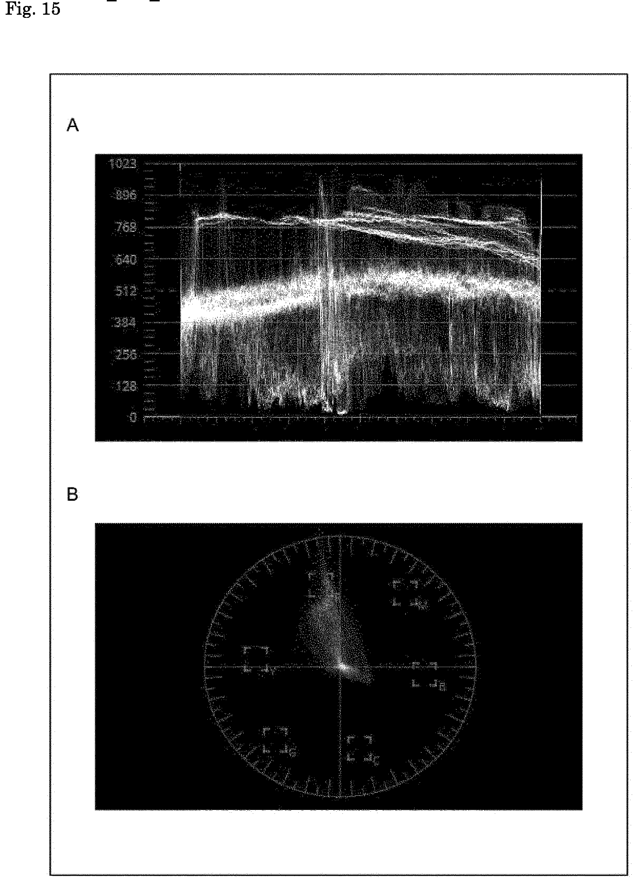

Fig. 15 is a diagram showing a display example of a luminance waveform and a vectorscope of a video frame after masking processing of a second method.
[Fig. 16]

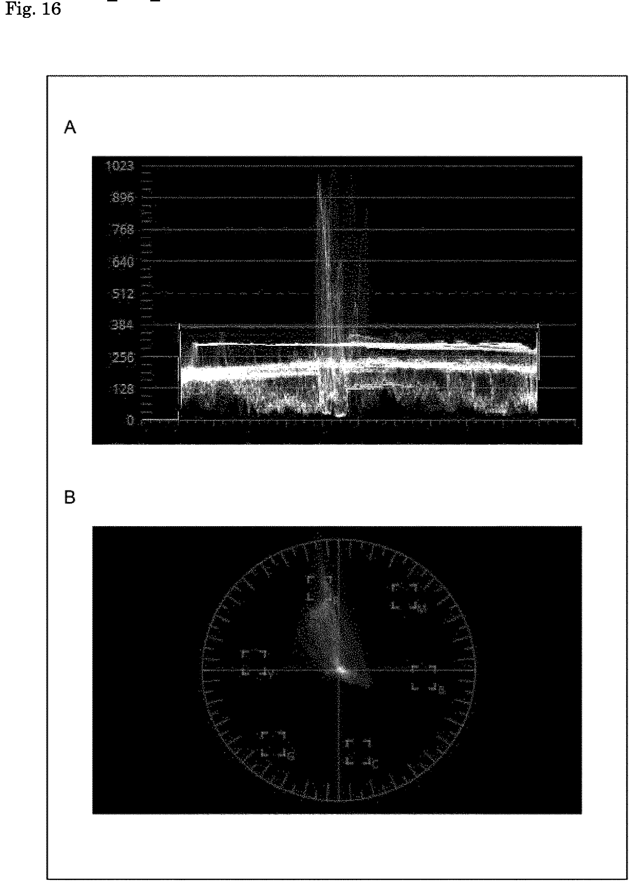

Fig. 16 is a diagram showing a display example of a luminance waveform and a vectorscope of a video frame after masking processing of a third method.
[Fig. 17]

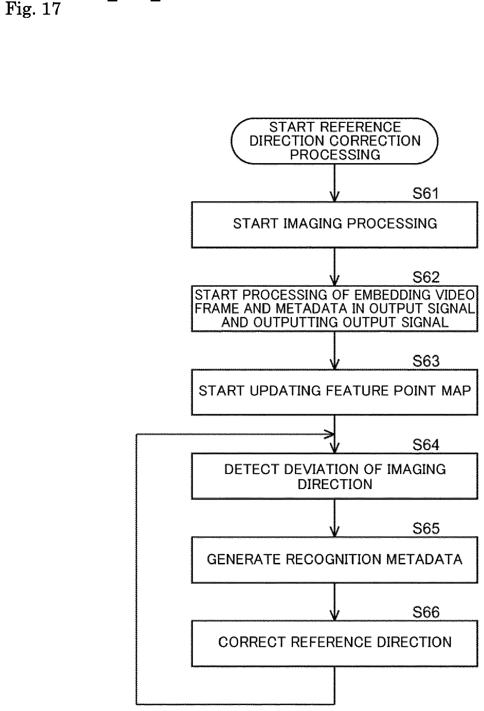

Fig. 17 is a flowchart for explaining reference direction correction processing.
[Fig. 18]

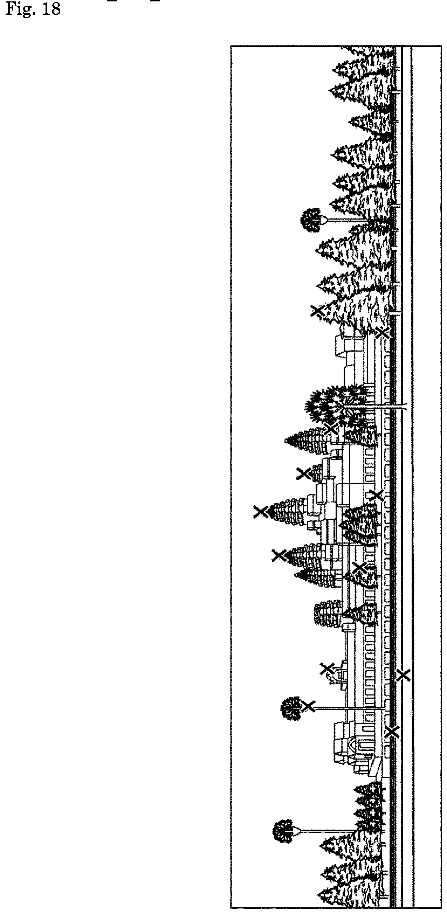

Fig. 18 is a diagram showing an example of a feature point map.
[Fig. 19]

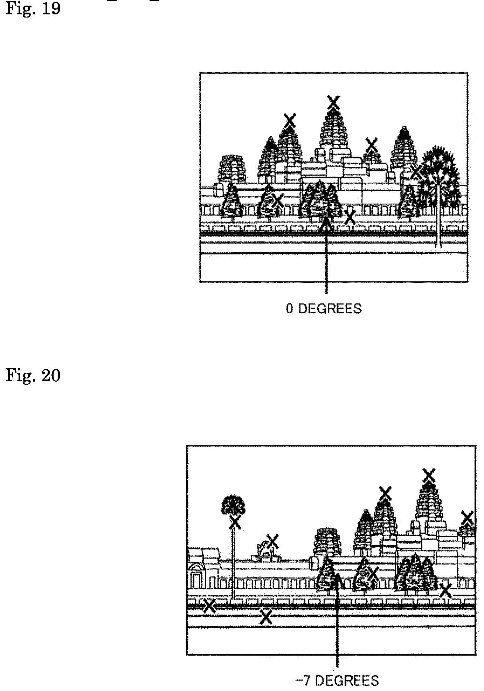

Fig. 19 is a diagram for explaining a method of detecting an imaging direction based on feature points.
[Fig. 20]
Fig. 20 is a diagram for explaining a method of detecting an imaging direction based on feature points.
[Fig. 21]

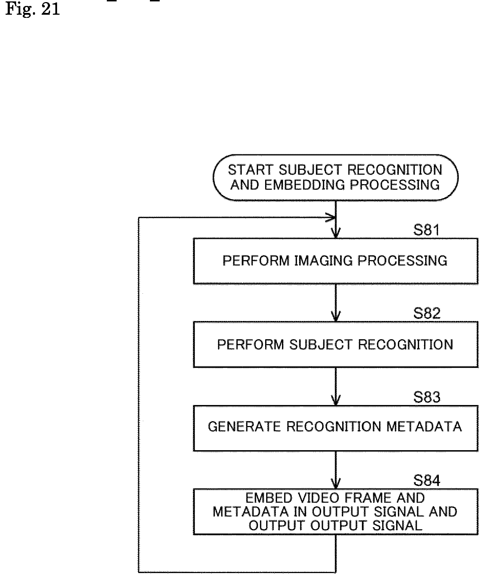

Fig. 21 is a flowchart for explaining subject recognition and embedding processing.
[Fig. 22]

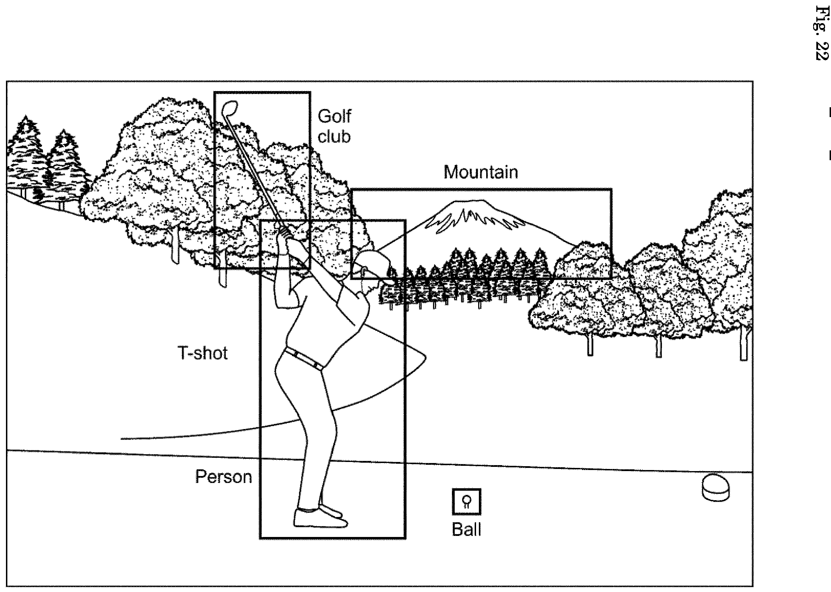

Fig. 22 is a diagram showing an example of a video superimposed with information indicating the result of subject recognition.
[Fig. 23]

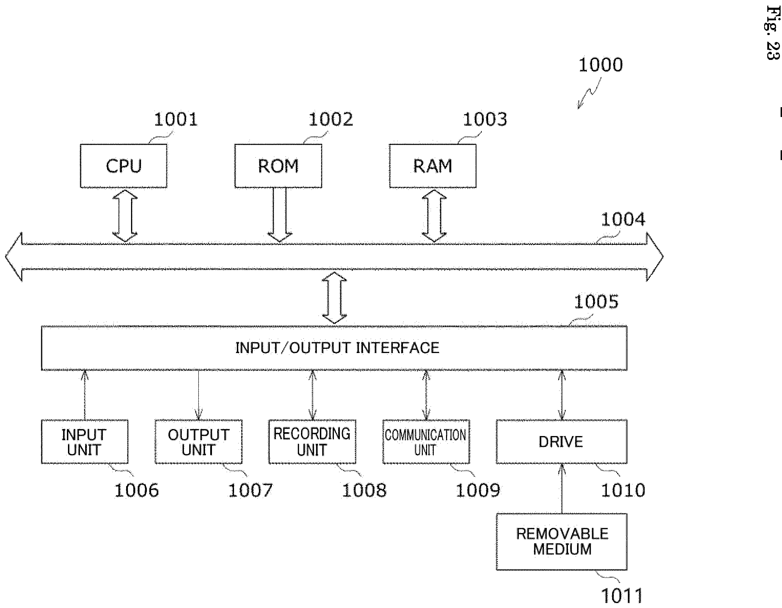

Fig. 23 is a diagram showing a configuration example of a computer.

[Description of Embodiments]

An embodiment for implementing the present technology will be described below. The description will be made in the following order.

1. Embodiment
2. Modification Example
3. Others

« 1. Embodiment»

Embodiments of the present technology will be described with reference to Figs. 1 to 22.

<Configuration Example of Information Processing System 1>

Fig. 1 is a block diagram showing an embodiment of an information processing system 1 to which the present technology is applied.
The information processing system 1 includes a camera 11, a tripod 12, a head stand 13, a camera cable 14, a CCU (Camera Control Unit) 15 that controls the camera 11, an operation panel 16 and a monitor 17. The camera 11 is installed on the head stand 13 attached to the tripod 12 so as to be rotatable in pan, tilt and roll directions. The camera 11 and the CCU 15 are connected by the camera cable 14.

The camera 11 includes a body portion 21, a lens 22 and a viewfinder 23. The lens 22 and the viewfinder 23 are attached to the body portion 21. The body portion 21 includes a signal processing unit 31, a motion sensor 32 and a CPU 33.

The lens 22 supplies lens information regarding the lens 22 to the CPU 33. The lens information includes, control values, specifications, and the like of lenses such as, for example, the focal length, the focusing distance, and the iris value of the lens 22.

The signal processing unit 31 shares video signal processing with the signal processing unit 51 of the CCU 15. For example, the signal processing unit 31 performs predetermined signal processing on a video signal obtained by an image sensor (not shown) capturing images of a subject through the lens 22, and generates a video frame composed of the captured images captured by the image sensor. The signal processing unit 31 supplies the video frame to the viewfinder 23 and outputs them to the signal processing unit 51 of the CCU 15 via the camera cable 14.

The motion sensor 32 includes, for example, an angular velocity sensor and an acceleration sensor, and detects the angular velocity and acceleration of the camera 11. The motion sensor 32 supplies the CPU 33 with data indicating the detection result of the angular velocity and acceleration of the camera 11.

The CPU 33 controls processing of each part of the camera 11. For example, the CPU 33 changes the control values of the camera 11 or displays information about the control values on the viewfinder 23 based on the control signal input from the CCU 15.

The CPU 33 detects the posture (pan angle, tilt angle, roll angle) of the camera 11, that is, the imaging direction of the camera 11, based on the detection result of the angular velocity of the camera 11. For example, the CPU 33 detects the imaging direction (posture) of the camera 11 by setting a reference direction in advance and cumulatively calculating (integrating) the amount of change in the orientation of the camera 11 with respect to the reference direction. Note that the CPU 33 may use the detection result of the acceleration of the camera 11 to detect the imaging direction of the camera 11.

Here, the reference direction of the camera 11 is the direction in which the pan angle, tilt angle, and roll angle of the camera 11 are 0 degrees. The CPU 33 corrects the reference direction held therein based on the correction data included in the recognition metadata input from the CCU 15.

The CPU 33 acquires control information of the body portion 21 such as a shutter speed and a color balance. The CPU 33 generates camera metadata including imaging direction information, control information, and lens information of the camera 11. The CPU 33 outputs the camera metadata to the CPU 52 of the CCU 15 via the camera cable 14.

The CPU 33 controls display of a live-view image (live view) displayed on the viewfinder 23. The CPU 33 controls display of information to be superimposed on the live-view image based on recognition metadata and control signals input from the CCU 15.

Under the control of the CPU 33, the viewfinder 23 displays a live-view image and displays various pieces of information to be superimposed on the live-view image based on the video frame supplied from the signal processing unit 31.

The CCU 15 includes a signal processing unit 51, a CPU 52, an information processing unit 53, an output unit 54 and a masking processing unit 55.

The signal processing unit 51 performs predetermined video signal processing on the video frame generated by the signal processing unit 31 of the camera 11. The signal processing unit 51 supplies the video frame after the video signal processing to the information processing unit 53, the output unit 54 and the masking processing unit 55.

The CPU 52 controls processing of each part of the CCU 15. The CPU 52 also communicates with the operation panel 16 and acquires control signals input from the operation panel 16. The CPU 52 outputs the acquired control signals to the camera 11 via the camera cable 14 or supplies the same to the masking processing unit 55, as necessary.

The CPU 52 supplies the camera metadata input from the camera 11 to the information processing unit 53 and the masking processing unit 55. The CPU 52 outputs the recognition metadata supplied from the information processing unit 53 to the camera 11 via the camera cable 14, outputs the same to the operation panel 16, and supplies the same to the masking processing unit 55. The CPU 52 generates additional metadata based on the camera metadata and recognition metadata, and supplies the same to the output unit 54.

The information processing unit 53 performs various kinds of recognition processing using computer vision, AI (Artificial Intelligence), machine learning, and the like on the video frame. For example, the information processing unit 53 performs subject recognition, region recognition, and the like within the video frame. More specifically, for example, the information processing unit 53 performs extraction of feature points, matching, detection (posture detection) of the imaging direction of the camera 11 based on tracking, skeleton detection by machine learning, face detection, face identification, pupil detection, object detection, action recognition, semantic segmentation, and the like. The information processing unit 53 detects the deviation of the imaging direction detected by the camera 11 based on the video frame. The information processing unit 53 generates recognition metadata including data based on the result of recognition processing. The information processing unit 53 supplies the recognition metadata to the CPU 52.

The output unit 54 arranges (adds) the video frame and additional metadata to an output signal of a predetermined format (for example, an SDI (Serial Digital Interface) signal), and outputs the output signal to the monitor 17 in the subsequent stage.

The masking processing unit 55 performs masking processing on the video frame based on the control signal and recognition metadata supplied from the CPU 52. As will be described later, the masking processing is processing of masking a region (hereinafter referred to as a masking region) other than a region of a subject of a predetermined type in a video frame. The output unit 54 arranges (adds) the video frame after the masking processing to an output signal (for example, an SDI signal) of a predetermined format, and outputs the output signal to the monitor 17 in the subsequent stage.

The operation panel 16 is configured by, for example, an MSU (Master Setup Unit), an RCP (Remote Control Panel), and the like. The operation panel 16 is used by a user such as a VE (Video Engineer), generates control signals based on user operations, and outputs the control signals to the CPU 52.

The monitor 17 is used, for example, by a user such as a VE to check a video captured by the camera 11. For example, the monitor 17 displays a video based on the output signal from the output unit 54. The monitor 17 displays the video after the masking processing based on the output signal from the masking processing unit 55. The monitor 17 displays a luminance waveform, a vectorscope, and the like of the video frame after the masking processing.

Hereinafter, description of the camera cable 14 will be omitted as appropriate in the processing of transmitting signals and data between the camera 11 and the CCU 15. For example, when the camera 11 outputs a video frame to the CCU 15 via the camera cable 14, the description of the camera cable 14 may be omitted and it may be simply stated that the camera 11 outputs a video frame to the CCU 15.

<Functional Configuration Example of CPU 33>

Fig. 2 shows a configuration example of functions realized by the CPU 33 of the camera 11. For example, when the CPU 33 executes a predetermined control program, functions including the control unit 71, the imaging direction detection unit 72, the camera metadata generation unit 73, and the display control unit 74 are realized.

The control unit 71 controls processing of each part of the camera 11.

The imaging direction detection unit 72 detects the imaging direction of the camera 11 based on the detection result of the angular velocity of the camera 11. Note that the imaging direction detection unit 72 may use the detection result of the acceleration of the camera 11 to detect the imaging direction of the camera 11. The imaging direction detection unit 72 corrects the reference direction of the camera 11 based on the recognition metadata input from the CCU 15.

The camera metadata generation unit 73 generates camera metadata including imaging direction information, control information, and lens information of the camera 11. The camera metadata generation unit 73 outputs the camera metadata to the CPU 52 of the CCU 15.

The display control unit 74 controls display of a live-view image by the viewfinder 23. The display control unit 74 controls display of information superimposed on the live-view image by the viewfinder 23 based on the recognition metadata input from the CCU 15.

<Functional Configuration Example of CPU 52>

Fig. 3 shows a configuration example of functions realized by the CPU 52 of the CCU 15. For example, the functions including the control unit 101 and the metadata output unit 102 are realized by the CPU 52 executing a predetermined control program.

The control unit 101 controls processing of each part of the CCU 15.

The metadata output unit 102 supplies the camera metadata input from the camera 11 to the information processing unit 53 and the masking processing unit 55. The metadata output unit 102 outputs the recognition metadata supplied from the information processing unit 53 to the camera 11, the operation panel 16, and the masking processing unit 55. The metadata output unit 102 generates additional metadata based on the camera metadata and the recognition metadata supplied from the information processing unit 53 and supplies the same to the output unit 54.

<Configuration Example of Information Processing Unit 53>

Fig. 4 shows a configuration example of the information processing unit 53 of the CCU 15. The information processing unit 53 includes a recognition unit 131 and a recognition metadata generation unit 132.

The recognition unit 131 performs various kinds of recognition processing on a video frame.

The recognition metadata generation unit 132 generates recognition metadata including data based on recognition processing by the recognition unit 131. The recognition metadata generation unit 132 supplies the recognition metadata to the CPU 52.

<Processing of Information Processing System 1>

Next, processing of the information processing system 1 will be described.

<Focus Index Display Processing>

First, the focus index display processing executed by the information processing system 1 will be described with reference to the flowchart of Fig. 5.

This processing starts, for example, when the user uses the operation panel 16 to input an instruction to start displaying the focus index values, and ends when the user inputs an instruction to stop displaying the focus index values.

In step S 1, the information processing system 1 performs imaging processing.

Specifically, an image sensor (not shown) captures an image of a subject to obtain a video signal and supplies the obtained video signal to the signal processing unit 31. The signal processing unit 31 performs predetermined video signal processing on the video signal supplied from the image sensor to generate a video frame. The signal processing unit 31 supplies the video frame to the viewfinder 23 and outputs the same to the signal processing unit 51 of the CCU 15. The viewfinder 23 displays a live-view image based on the video frame under the control of the display control unit 74.

The lens 22 supplies lens information regarding the lens 22 to the CPU 33. The motion sensor 32 detects the angular velocity and acceleration of the camera 11 and supplies data indicating the detection result to the CPU 33.

The imaging direction detection unit 72 detects the imaging direction of the camera 11 based on the detection result of the angular velocity and acceleration of the camera 11. For example, the imaging direction detection unit 72 detects the imaging direction (posture) of the camera 11 by cumulatively calculating (integrating) the amount of change in the direction (angle) of the camera 11 based on the angular velocity detected by the motion sensor 32 with respect to a reference direction set in advance.

The camera metadata generation unit 73 generates camera metadata including imaging direction information, lens information, and control information of the camera 11. The camera metadata generation unit 73 outputs camera metadata corresponding to a video frame to the CPU 52 of the CCU 15 in synchronization with the output of the video frame by the signal processing unit 31. As a result, the video frame is associated with camera metadata including imaging direction information, control information, and lens information of the camera 11 near the imaging time of the video frame.

The signal processing unit 51 of the CCU 15 performs predetermined video signal processing on the video frame acquired from the camera 11, and outputs the video frame after the video signal processing to the information processing unit 53, the output unit 54, and the masking processing unit 55.

The metadata output unit 102 of the CCU 15 supplies the camera metadata acquired from the camera 11 to the information processing unit 53 and the masking processing unit 55.

In step S2, the recognition unit 131 of the CCU 15 performs subject recognition. For example, the recognition unit 131 recognizes a subject in the video frame, of the type for which the focus index value is to be displayed using skeleton detection, face detection, pupil detection, object detection. Note that when there are a plurality of subjects of the type for which the focus index value is to be displayed in the video frame, the recognition unit 131 recognizes each subject individually.

In step S3, the recognition unit 131 of the CCU 15 calculates a focus index value. Specifically, the recognition unit 131 calculates a focus index value in a region including each recognized subject.

Note that the method of calculating the focus index value is not particularly limited. For example, frequency analysis using Fourier transform, cepstrum analysis, DfD (Depth from Defocus) technique, and the like are used as a method of calculating the focus index value.

In step S4, the CCU 15 generates recognition metadata. Specifically, the recognition metadata generation unit 132 generates recognition metadata including the position and focus index value of each subject recognized by the recognition unit 131 and supplies the recognition metadata to the CPU 52. The metadata output unit 102 outputs the recognition metadata to the CPU 33 of the camera 11.

In step S5, the viewfinder 23 of the camera 11 displays the focus index under the control of the display control unit 74.

Fig. 6 schematically shows an example of focus index display. Fig. 6A shows an example of a live-view image displayed on the viewfinder 23 before the focus index is displayed. Fig. 6B shows an example of a live-view image displayed on the viewfinder 23 after the focus index is displayed.

In this example, persons 201a to 201c are shown in the live-view image. The person 201a is closest to the camera 11 and person 201c is farthest from the camera 11. The camera 11 is focused on the person 201a.

In this example, the right eyes of the persons 201a to 201c are set as the display target of the focus index value. Then, as shown in Fig. 6B, an indicator 202a, which is a circular image indicating the position of the right eye of the person 201a, is displayed around the right eye of the person 201a. An indicator 202b, which is a circular image indicating the position of the right eye of the person 201b, is displayed around the right eye of the person 201b. An indicator 202c, which is a circular image indicating the position of the right eye of the person 201c, is displayed around the right eye of the person 201c.

Bars 203a to 203c indicating focus index values for the right eyes of the persons 201a to 201c are displayed below the live-view image. The bar 203a indicates the focus index value for the right eye of the person 201a. The bar 203b indicates the focus index value for the right eye of the person 201b. The bar 203c indicates the focus index value for the right eye of the person 201c. The lengths of the bars 203a to 203c indicate the values of the focus index values.

The bars 203a to 203c are set in different display modes (for example, different colors). On the other hand, the indicator 202a and the bar 203a are set in the same display mode (for example, the same color). The indicator 202b and the bar 203b are set in the same display mode (for example, the same color). The indicator 202c and the bar 203c are set in the same display mode (for example, the same color). This allows a user (for example, a cameraman) to easily grasp the correspondence between each subject and the focus index value.

Here, for example, in the case where the display target region of the focus index value is fixed at the center or the like of the viewfinder 23, the focus index value cannot be used if the subject to be focused moves out of the region.

In contrast, according to the present technology, a desired type of subject is automatically tracked, and the focus index value of the subject is displayed. When there are a plurality of subjects for which the focus index value is to be displayed, the focus index values are displayed individually. The subject and the focus index value are associated in a different display mode for each subject.

This allows a user (for example, a cameraman) to easily perform focus adjustment on a desired subject.

Thereafter, the processing returns to step S1 and processing subsequent to step S1 is performed.

<Peaking Highlighting Processing>

Next, the peaking highlighting processing executed by the information processing system 1 will be described with reference to the flowchart of Fig. 7.

This processing starts, for example, when the user uses the operation panel 16 to input an instruction to start the peaking highlighting, and ends when the user inputs an instruction to stop the peaking highlighting.

Here, peaking highlighting is a function of highlighting high-frequency components in a video frame, and is also called detail highlighting. Peaking highlighting is used, for example, to assist manual focus operations.

In step S21, imaging processing is performed in the same manner as the processing in step S1 of Fig. 5.

In step S22, the recognition unit 131 of the CCU 15 performs subject recognition. For example, the recognition unit 131 recognizes the region and type of each subject in a video frame using object detection, semantic segmentation, or the like.

In step S23, the CCU 15 generates recognition metadata. Specifically, the recognition metadata generation unit 132 generates recognition metadata including the position and type of each subject recognized by the recognition unit 131 and supplies the recognition metadata to the CPU 52. The metadata output unit 102 outputs the recognition metadata to the CPU 33 of the camera 11.

In step S24, the viewfinder 23 of the camera 11 performs peaking highlighting by limiting the region based on the recognition metadata under the control of the display control unit 74.

Fig. 8 schematically shows an example of peaking highlighting for a golf tee shot scene. Fig. 8A shows an example of a live-view image displayed on the viewfinder 23 before peaking highlighting. Fig. 8B shows an example of a live-view image displayed on the viewfinder 23 after peaking highlighting, in which the highlighted region is hatched.

For example, if peaking highlighting is performed on the entire live-view image, high-frequency components in the background are also highlighted, which may reduce visibility.

On the other hand, in the present technology, it is possible to limit the subject to be displayed with peaking highlighting. For example, as shown in Fig. 8B, the subject to be displayed with peaking highlighting can be limited to a hatched region containing a person. In this case, in an actual live-view image, high-frequency components such as edges of hatched regions are highlighted using auxiliary lines or the like.

This improves the visibility of the peaking highlighting, and makes it easier for a user (for example, a cameraman) to manually focus on a desired subject, for example.

Thereafter, the processing returns to step S21 and processing subsequent to step S21 is performed.

<Video Masking Processing>

Next, the video masking processing executed by the information processing system 1 will be described with reference to the flowchart of Fig. 9.

This processing starts, for example, when the user uses the operation panel 16 to input an instruction to start the video masking processing, and ends when the user inputs an instruction to stop the video masking processing.

In step S41, imaging processing is performed in the same manner as the processing in step S 1 of Fig. 5.

In step S42, the recognition unit 131 of the CCU 15 performs region recognition. For example, the recognition unit 131 divides a video frame into a plurality of regions for each subject type by performing semantic segmentation on the video frame.

In step S43, the CCU 15 generates recognition metadata. Specifically, the recognition metadata generation unit 132 generates recognition metadata including the region and type within the video frame recognized by the recognition unit 131, and supplies the recognition metadata to the CPU 52. The metadata output unit 102 supplies the recognition metadata to the masking processing unit 55.

In step S44, the masking processing unit 55 performs masking processing.

For example, the user uses the operation panel 16 to select the type of subject that the user wishes to leave without masking. The control unit 101 supplies data indicating the type of subject selected by the user to the masking processing unit 55.

The masking processing unit 55 performs masking processing on a subject region (masking region) other than the type selected by the user in the video frame.

Hereinafter, the subject region of the type selected by the user will be referred to as a recognition target region.

Here, a specific example of the masking processing will be described with reference to Figs. 10 to 12.

Fig. 10 schematically shows an example of a video frame in which a golf tee shot is captured.

Fig. 11 shows an example of the result of performing region recognition on the video frame of Fig. 10. In this example, the video frame is divided into regions 251 to 255, and each region is shown in a different pattern. The region 251 is a region in which a person is shown (hereinafter referred to as a person region). The region 252 is a region in which the ground is shown. The region 253 is a region in which trees are shown. The region 254 is a region in which the sky is shown. The region 255 is the region in which a tee marker is shown.

Fig. 12 schematically shows an example in which recognition target regions and masking regions are set for the video frame of Fig. 10. In this example, hatched regions (regions corresponding to the regions 252 to 255 in Fig. 11) are set as masking regions. In addition, a non-hatched region (a region corresponding to the region 251 in Fig. 11) is set as the recognition target region.

Note that it is also possible to set regions of a plurality of types of subjects as recognition target regions.

Here, three types of masking processing methods will be described.

In the masking processing of the first method, pixel signals in the masking region are replaced with black signals. That is, the masking region is blacked out. On the other hand, pixel signals in the recognition target region are not particularly changed.

In the masking processing of the second method, the chroma component of the pixel signal in the masking region is reduced. For example, the U and V components of the chroma component of the pixel signal in the masking region are set to zero. On the other hand, the luminance component of the pixel signal in the masking region is not particularly changed. The pixel signals of the recognition target region are not particularly changed.

In the masking processing of the third method, the chroma components of pixel signals in the masking region are reduced in the same manner as in the masking processing of the second method. For example, the U and V components of the chroma components of the pixel signal in the masking region are set to zero. The luminance component of the masking region is reduced. For example, the luminance component of the masking region is converted by Equation (1) below, and the contrast of the luminance component of the masking region is compressed. On the other hand, pixel signals in the recognition target region are not particularly changed.

$$Yout = Yin \times gain + offset \dots (1)$$

Yin indicates the luminance component before masking processing. Yout indicates the luminance component after masking processing. gain indicates a predetermined gain and is set to a value less than 1.0. offset indicates an offset value.

The masking processing unit 55 arranges (adds) the video frame after the masking processing to an output signal of a predetermined format, and outputs the output signal to the monitor 17.

In step S45, the monitor 17 displays the video and waveform after the masking processing. Specifically, the monitor 17 displays a video based on the video frame after the masking processing based on the output signal acquired from the masking processing unit 55. The monitor 17 also displays the luminance waveform of the video frame after the masking processing for brightness adjustment. The monitor 17 displays a vectorscope of the video frame after the masking processing for color tone adjustment.

Now, with reference to Figs. 13 to 16, the first to third masking processing methods described above will be compared.

Figs. 13 to 16 show display examples of the luminance waveform and vectorscope of the video frame in Fig. 10.

Fig. 13A shows a display example of the luminance waveform of the video frame before masking processing, and Fig. 13B shows a display example of the vectorscope of the video frame before masking processing.

The horizontal axis of the luminance waveform indicates the horizontal position of the video frame, and the vertical axis indicates the amplitude of the luminance. The circumferential direction of the vectorscope indicates hue, and the radial direction indicates saturation. This also applies to Figs. 14 to 16.

In the luminance waveform before masking processing, the luminance waveform of the entire video frame is displayed. Similarly, in the vectorscope before masking processing, the hue and saturation waveforms of the entire video frame are displayed.

In the luminance waveform and vectorscope before masking processing, the luminance components and chroma components in regions other than the recognition target region become noise. Further, for example, when adjusting the color balance between a plurality of cameras, the brightness waveform and vectorscope waveform for the region of the same subject greatly differ depending on whether the subject is front-lit or back-lit. Therefore, it is particularly difficult for an inexperienced user to adjust the brightness and color tone of the recognition target region while looking at the luminance waveform and vectorscope before masking processing.

Fig. 14A shows a display example of the luminance waveform of the video frame after the masking processing of the first method, and Fig. 14B shows a display example of the vectorscope of the video frame after the masking processing of the first method.

In the luminance waveform after the masking processing of the first method, the luminance waveform of only a person region, which is the recognition target region, is displayed. Therefore, for example, it becomes easy to adjust the brightness only for a person.

In the vectorscope after the masking processing of the first method, the hue and saturation waveforms of only the person region, which is the recognition target region, are displayed. Therefore, for example, it becomes easy to adjust the color tone only for a person.

However, in the video frame after the masking processing of the first method, the visibility of the video frame is lowered because the masking region is blacked out. In other words, the user cannot confirm the video other than the recognition target region.

Fig. 15A shows a display example of the luminance waveform of the video frame after the masking processing of the second method, and Fig. 15B shows a display example of the vectorscope of the video frame after the masking processing of the second method.

The luminance waveform after the masking processing of the second method is similar to the luminance waveform before the masking processing in Fig. 13A. Therefore, for example, it becomes difficult to adjust the brightness only for a person.

The waveform of the vectorscope after the masking processing of the second method is similar to the waveform of the vectorscope after the masking processing of the first method in Fig. 14B. Therefore, for example, it becomes easy to adjust the color tone only for a person.

In addition, since the luminance component of the masking region remains as it is in the video frame after the masking processing of the second method, the visibility is improved compared to the video frame after the masking processing of the first method.

Fig. 16A shows a display example of the luminance waveform of the video frame after the masking processing of the third method, and Fig. 16B shows a display example of the vectorscope of the video frame after the masking processing of the third method.

In the luminance waveform after the masking processing of the third method, the waveform of the person region, which is the recognition target region, appears to stand out because the contrast of the masking region is compressed. Therefore, for example, it becomes easy to adjust the brightness only for a person.

The waveform of the vectorscope after the masking processing of the third method is similar to the waveform of the vectorscope after the masking processing of the first method in Fig. 14B. Therefore, for example, it becomes easy to adjust the color tone only for a person.

In addition, since the luminance component of the masking region remains as it is in the video frame after the masking processing of the third method even though the contrast is compressed, the visibility is improved compared to the video frame after the masking processing of the first method.

Thus, according to the masking processing of the third method, it is possible to easily adjust the brightness and color tone of the recognition target region while ensuring the visibility of the masking region of the video frame.

Note that, for example, the luminance of the video frame may be displayed by other methods such as palette display and histogram. In this case, the brightness of the recognition target region can be easily adjusted by using the masking processing of the first or third method.

After that, the processing returns to step S41, and the processing after step S41 is executed.

In this way, it is possible to easily adjust the desired brightness and color tone of the subject while maintaining the visibility of a video frame. Since the monitor 17 does not need to perform special processing, an existing monitor can be used as the monitor 17.

Note that, for example, in step S43, the metadata output unit 102 may output the recognition metadata to the camera 11 as well. Then, in the camera 11, the result of region recognition may be used for selection of a detection region for auto iris and white balance adjustment functions.

<Reference Direction Correction Processing>

Next, reference direction correction processing executed by the information processing system 1 will be described with reference to the flowchart of Fig. 17.

This processing starts, for example, when the camera 11 starts imaging, and ends when the camera 11 finishes imaging.

In step S61, the information processing system 1 starts imaging processing. That is, the imaging processing similar to that of step S 1 in Fig. 5 described above starts.

In step S62, the CCU 15 starts the processing of embedding the video frame and metadata in the output signal and outputting the output signal. Specifically, the metadata output unit 102 starts the processing of organizing the camera metadata acquired from the camera 11 to generate additional metadata, and supplying the additional metadata to the output unit 54. The output unit 54 starts the processing of arranging (adding) the video frame and additional metadata to an output signal of a predetermined format, and outputting the output signal to the monitor 17.

In step S63, the recognition unit 131 of the CCU 15 starts updating a feature point map. Specifically, the recognition unit 131 starts the processing of detecting the feature points of the video frame and updating the feature point map indicating the distribution of the feature points around the camera 11 based on the detection result.

Fig. 18 shows an example of a feature point map. The cross marks in the drawing indicate the positions of feature points.

For example, the recognition unit 131 generates and updates a feature point map indicating the positions and feature quantity vectors of the feature points of the scene around the camera 11 by connecting the detection results of the feature points of the video frame obtaining by imaging the surroundings of the camera 11. In this feature point map, the position of a feature point is represented by, for example, a direction based on the reference direction of the camera 11 and a distance in the depth direction.

In step S64, the recognition unit 131 of the CCU 15 detects a deviation of the imaging direction. Specifically, the recognition unit 131 detects the imaging direction of the camera 11 by matching the feature points detected from the video frame and the feature point map.

For example, Fig. 19 shows an example of a video frame when the camera 11 faces the reference direction. Fig. 20 shows an example of a video frame when the camera 11 faces -7 degrees (7 degrees counterclockwise) from the reference direction in the panning direction.

For example, the recognition unit 131 detects the imaging direction of the camera 11 by matching the feature points of the feature point map of Fig. 18 and the feature points of the video frame of Fig. 19 or 20.

Then, the recognition unit 131 detects the difference between the imaging direction detected based on the video frame and the imaging direction detected by the camera 11 using the motion sensor 32 as a deviation of the imaging direction. That is, the detected deviation corresponds to a cumulative error caused by the imaging direction detection unit 72 of the camera 11 cumulatively calculating angular velocities detected by the motion sensor 32.

In step S65, the CCU 15 generates recognition metadata. Specifically, the recognition metadata generation unit 132 generates recognition metadata including data based on the detected deviation of the imaging direction. For example, the recognition metadata generation unit 132 calculates a correction value for the reference direction based on the detected deviation of the imaging direction, and generates recognition metadata including the correction value for the reference direction. The recognition metadata generation unit 132 supplies the generated recognition metadata to the CPU 52.

The metadata output unit 102 outputs the recognition metadata to the camera 11.

In step S66, the imaging direction detection unit 72 of the camera 11 corrects the reference direction based on the correction value for the reference direction included in the recognition metadata. At this time, the imaging direction detection unit 72 uses, for example, α-blending (IIR (Infinite impulse response) processing) to continuously correct the reference direction in a plurality of times. As a result, the reference direction changes gradually and smoothly.

Thereafter, the processing returns to step S64 and processing subsequent to step S64 is performed.

By appropriately correcting the reference direction of the camera 11 in this way, the detection accuracy of the imaging direction by the camera 11 is improved.

The camera 11 corrects the reference direction based on the result of the video frame recognition processing by the CCU 15. As a result, the delay in correcting the deviation of the imaging direction of the camera 11 is shortened compared to the case where the CCU 15 directly corrects the imaging direction using recognition processing that requires processing time.

<Subject Recognition and Metadata Embedding Processing>

Next, the subject recognition and metadata embedding processing executed by the information processing system 1 will be described with reference to the flowchart of Fig. 21.

This processing starts, for example, when the user uses the operation panel 16 to input an instruction to start the subject recognition and embedding processing, and ends when the user inputs an instruction to stop the subject recognition and embedding processing.

In step S81, imaging processing is performed in the same manner as the processing in step S 1 of Fig. 5.

In step S82, the recognition unit 131 of the CCU 15 performs subject recognition. For example, the recognition unit 131 recognizes the position, type, and action of each object in the video frame by performing subject recognition and action recognition on the video frame.

In step S83, the CCU 15 generates recognition metadata. Specifically, the recognition metadata generation unit 132 generates recognition metadata including the position, type, and action of each object recognized by the recognition unit 131 and supplies the recognition metadata to the CPU 52.

The metadata output unit 102 generates additional metadata based on the camera metadata acquired from the camera 11 and the recognition metadata acquired from the recognition metadata generation unit 132. The additional metadata includes, for example, imaging direction information, lens information, and control information of the camera 11, as well as the recognition results of the position, type, and action of each object in the video frame. The metadata output unit 102 supplies the additional metadata to the output unit 54.

In step S84, the output unit 54 embeds the video frame and metadata in the output signal and outputs the output signal. Specifically, the output unit 54 arranges (adds) the video frame and additional metadata to an output signal of a predetermined format, and outputs the output signal to the monitor 17.

The monitor 17 displays the video shown in Fig. 22, for example, based on the output signal. The video in Fig. 22 is the video in Fig. 10 superimposed with information indicating the position, type, and action recognition result of the object included in the additional metadata.

In this example, the positions of the person, golf club, ball, and mountain in the video are displayed. As the action of the person, the person making a tee shot is shown.

Thereafter, the processing returns to step S81 and processing subsequent to step S81 is performed.

In this manner, metadata including the result of subject recognition for a video frame can be embedded in the output signal in real-time without human intervention. As a result, for example, as shown in Fig. 22, it is possible to quickly present the result of subject recognition.

In addition, it is possible to omit the processing of performing recognition processing and analysis processing of the video frame and adding metadata in the device in the subsequent stage.

<Summary of Effects of Present Technology>

As described above, the CCU 15 performs recognition processing on the video frame while the camera 11 is performing imaging, and the camera 11 and the monitor 17 outside the CCU 15 can use the result of the recognition processing in real-time.

For example, the viewfinder 23 of the camera 11 can display information based on the result of the recognition processing so as to be superimposed on the live-view image in real-time. The monitor 17 can display the information based on the result of the recognition processing so as to be superimposed on the video based on the video frame in real-time, and display the video after the masking processing in real-time. This improves operability of users such as cameramen and VEs.

Moreover, the camera 11 can correct the detection result of the imaging direction in real-time based on the correction value of the reference direction obtained by the recognition processing. This improves the detection accuracy of the imaging direction.

«2. Modification Examples»

Hereinafter, modification examples of the foregoing embodiments of the present technology will be described.

<Modification Example of Sharing of Processing>

For example, it is possible to change the sharing of the processing between the camera 11 and the CCU 15. For example, the camera 11 may execute part or all of the processing of the information processing unit 53 of the CCU 15.

However, for example, if the camera 11 executes all the processing of the information processing unit 53, the processing load on the camera 11 increases, the size of the casing of the camera 11 increases, and the power consumption and heat generation of the camera 11 increases. An increase in the size of the casing of the camera 11 and an increase in heat generation are undesirable because they hinder the routing of cables of the camera 11. Further, for example, when the information processing system 1 performs signal processing by a baseband processing unit by 4K/8K imaging, high frame-rate imaging, or the like, it is difficult for the camera 11 to develop the entire video frame like the information processing unit 53 and perform the recognition processing.

Further, for example, a device such as a PC (Personal Computer), a server, or the like in the subsequent stage of the CCU 15 may execute the processing of the information processing unit 53. In this case, the CCU 15 outputs the video frame and camera metadata to the device in the subsequent stage, and the device in the subsequent stage needs to perform the above-described recognition processing and the like to generate recognition metadata and output the same to the CCU 15. For this reason, processing delays and securing of transmission bands between the CCU 15 and the device in the subsequent stage pose a problem. In particular, a delay in processing related to the operation of the camera 11, such as focus operation, poses a problem.

Therefore, considering the addition of metadata to the output signal, the output of recognition metadata to the camera 11, the display of the result of recognition processing on the viewfinder 23 and the monitor 17, and the like, it is most suitable to provide the information processing unit 53 in the CCU 15 as described above.

<Other Modification Examples>

For example, the output unit 54 may output the additional metadata in association with the output signal without embedding it in the output signal.

For example, the recognition metadata generation unit 132 of the CCU 15 may generate recognition metadata including detection values of the deviation of the imaging direction instead of correction values of the reference direction as data used for correction of the reference direction. Then, the imaging direction detection unit 72 of the camera 11 may correct the reference direction based on the detection value of the deviation of the imaging direction.

«3. Others»

<Configuration Example of Computer>

The series of processing described above can be executed by hardware or can be executed by software. When the series of steps of processing is performed by software, a program of the software is installed in a computer. Here, the computer includes a computer embedded in dedicated hardware or, for example, a general-purpose personal computer capable of executing various functions by installing various programs.

Fig. 23 is a block diagram showing an example of a hardware configuration of a computer that executes the above-described series of processing according to a program.

In a computer 1000, a CPU (Central Processing Unit) 1001, a ROM (Read Only Memory) 1002, and a RAM (Random Access Memory) 1003 are connected to each other by a bus 1004.

An input/output interface 1005 is further connected to the bus 1004. An input unit 1006, an output unit 1007, a recording unit 1008, a communicating unit 1009, and a drive 1010 are connected to the input/output interface 1005.

The input unit 1006 is constituted of an input switch, a button, a microphone, an imaging element, or the like. The output unit 1007 is constituted of a display, a speaker, or the like. The recording unit 1008 is constituted of a hard disk, a nonvolatile memory, or the like. The communicating unit 1009 is constituted of a network interface or the like. The drive 1010 drives a removable medium 1011 such as a magnetic disk, an optical disc, a magneto-optical disk, or a semiconductor memory.

In the computer 1000 configured as described above, for example, the CPU 1001 loads a program recorded in the recording unit 1008 into the RAM 1003 via the input/output interface 1005 and the bus 1004 and executes the program to perform the series of processing described above.

The program executed by the computer 1000 (CPU 1001) may be recorded on, for example, the removable medium 1011 as a package medium or the like so as to be provided. The program can also be provided via a wired or wireless transmission medium such as a local area network, the Internet, or digital satellite broadcasting.

In the computer 1000, the program may be installed in the recording unit 1008 via the input/output interface 1005 by inserting the removable medium 1011 into the drive 1010. Furthermore, the program can be received by the communicating unit 1009 via a wired or wireless transfer medium to be installed in the recording unit 1008. In addition, the program may be installed in advance in the ROM 1002 or the recording unit 1008.

Note that the program executed by a computer may be a program that performs processing chronologically in the order described in the present specification or may be a program that performs processing in parallel or at a necessary timing such as a called time.

In the present specification, a system means a set of a plurality of constituent elements (devices, modules (components), or the like) and all the constituent elements may or may not be included in the same casing. Accordingly, a plurality of devices accommodated in separate casings and connected via a network and one device in which a plurality of modules are accommodated in one casing both constitute systems.

Further, embodiments of the present technique are not limited to the above-mentioned embodiment and various modifications may be made without departing from the gist of the present technique.

For example, the present technique may be configured as cloud computing in which a plurality of devices share and cooperatively process one function via a network.

In addition, each step described in the above flowchart can be executed by one device or executed in a shared manner by a plurality of devices.

Furthermore, in a case in which one step includes a plurality of processes, the plurality of processes included in the one step can be executed by one device or executed in a shared manner by a plurality of devices.

<Combination Example of Configuration>

The present technology can also have the following configuration.

(1) An information processing system including:

an imaging device that captures a captured image; and
an information processing device that controls the imaging device, wherein
the information processing device includes:

a recognition unit that performs recognition processing on the captured image;
a recognition metadata generation unit that generates recognition metadata including data based on a result of the recognition processing; and
an output unit that outputs the recognition metadata to the imaging device.

(2) The information processing system according to (1), wherein

the recognition unit performs at least one of subject recognition and region recognition in the captured image, and
the recognition metadata includes at least one of a result of subject recognition and a result of region recognition.

(3) The information processing system according to (2), wherein
the imaging device includes:

a display unit that displays a live-view image; and
a display control unit that controls display of the live-view image based on the recognition metadata.

(4)
The information processing system according to (3), wherein

the recognition unit calculates a focus index value for a subject of a predetermined type recognized by the subject recognition,
the recognition metadata further includes the focus index value, and
the display control unit superimposes an image indicating a position of the subject and the focus index value for the subject on the live-view image.

(5) The information processing system according to (4), wherein the display control unit superimposes the image indicating the position of the subject and the focus index value on the live-view image in different display modes for each subject.

(6) The information processing system according to any one of (3) to (5), wherein the display control unit performs peaking highlighting of the live-view image, peaking highlighting being limited to a region of a subject of a predetermined type based on the recognition metadata.

(7) The information processing system according to any one of (1) to (6), wherein the imaging device includes:

an imaging direction detection unit that detects an imaging direction of the imaging device with respect to a predetermined reference direction; and
a camera metadata generation unit that generates camera metadata including the detected imaging direction and outputs the camera metadata to the information processing device,
the recognition unit detects a deviation of the imaging direction included in the camera metadata based on the captured image, and
the recognition metadata includes data based on the detected deviation of the imaging direction.

(8)
The information processing system according to (7), wherein

the recognition metadata generation unit generates the recognition metadata including data used for correcting the reference direction based on the detected deviation of the imaging direction, and
the imaging direction detection unit corrects the reference direction based on the recognition metadata.

(9) An information processing method allowing an information processing device that controls an imaging device that captures a captured image to execute: performing recognition processing on the captured image;

generating recognition metadata including data based on a result of the recognition processing; and
outputting the recognition metadata to the imaging device.

(10) An information processing system including:

an imaging device that captures a captured image; and
an information processing device that controls the imaging device), wherein
the information processing device includes:

a recognition unit that performs recognition processing on the captured image;
a recognition metadata generation unit that generates recognition metadata including data based on a result of the recognition processing; and
an output unit that outputs the recognition metadata to a device in a subsequent stage.

(11) The information processing system according to (10), wherein

the recognition unit performs at least one of subject recognition and region recognition in the captured image, and
the recognition metadata includes at least one of a result of the subject recognition and a result of the region recognition.

(12) The information processing system according to (11), further including:
a masking processing unit that performs masking processing on a masking region, which is a region other than a region of a subject of a predetermined type in the captured image, and outputs the captured image after the masking processing to the device in the subsequent stage.

(13) The information processing system according to (12), wherein
the masking processing unit reduces a chroma component of the masking region and compresses a contrast of a luminance component of the masking region.

(14) The information processing system according to any one of (10) to (13), wherein the output unit adds at least a part of the recognition metadata to an output signal containing the captured image, and outputs the output signal to the device in the subsequent stage.

(15) The information processing system according to (14), wherein the imaging device includes:

a camera metadata generation unit that generates camera metadata including a detection result of the imaging direction of the imaging device and outputs the camera metadata to the information processing device, and

the output unit further adds at least a part of the camera metadata to the output signal.

(16) The information processing system according to (15), wherein the camera metadata further includes at least one of control information of the imaging device and lens information regarding a lens of the imaging device.

(17) An information processing method allowing an information processing device that controls an imaging device that captures a captured image to execute: performing recognition processing on the captured image;

generating recognition metadata including data based on a result of the recognition processing; and

outputting the recognition metadata to a device in a subsequent stage.

(18) An information processing device including:

a recognition unit that performs recognition processing on a captured image captured by an imaging device;

a recognition metadata generation unit that generates recognition metadata including data based on a result of the recognition processing; and an output unit that outputs the recognition metadata.

(19) The information processing device according to (18), wherein the output unit outputs the recognition metadata to the imaging device.

(20) The information processing device according to (18) or (19), wherein the output unit outputs the recognition metadata to a device in a subsequent stage.

The advantageous effects described in the present specification are merely exemplary and are not limited, and other advantageous effects may be obtained.

[Reference Signs List]

1 Information processing system

11 Camera
15 CCU
16 Operation panel
17 Monitor
21 Body portion
22 Lens
23 Viewfinder
31 Signal processing unit
32 Motion sensor
33 CPU
51 Signal processing unit
52 CPU
53 Information processing unit
54 Output unit
55 Masking processing unit
71 Control unit
72 Imaging direction detection unit
73 Camera metadata generation unit
74 Display control unit
101 Control unit
102 Metadata output unit
131 Recognition unit
132 Recognition metadata generation unit

**Claims**

1. An information processing system comprising:

an imaging device that captures a captured image; and
an information processing device that controls the imaging device, wherein
the information processing device includes:

a recognition unit that performs recognition processing on the captured image;
a recognition metadata generation unit that generates recognition metadata including data based on a result of the recognition processing; and
an output unit that outputs the recognition metadata to the imaging device.

2. The information processing system according to claim 1, wherein

the recognition unit performs at least one of subject recognition and region recognition in the captured image, and
the recognition metadata includes at least one of a result of the subject recognition and a result of the region recognition.

3. The information processing system according to claim 2, wherein
the imaging device includes:

a display unit that displays a live-view image; and
a display control unit that controls display of the live-view image based on the recognition metadata.

4. The information processing system according to claim 3, wherein

the recognition unit calculates a focus index value for a subject of a predetermined type recognized by the subject recognition,
the recognition metadata further includes the focus index value, and
the display control unit superimposes an image indicating a position of the subject and the focus index value for the subject on the live-view image.

5. The information processing system according to claim 4, wherein
the display control unit superimposes the image indicating the position of the subject and the focus index value on the live-view image in different display modes for each subject.

6. The information processing system according to claim 3, wherein
the display control unit performs peaking highlighting of the live-view image, peaking highlighting being limited to a region of a subject of a predetermined type, based on the recognition metadata.

7. The information processing system according to claim 1, wherein
the imaging device includes:

an imaging direction detection unit that detects an imaging direction of the imaging device with respect to a predetermined reference direction; and
a camera metadata generation unit that generates camera metadata including the detected imaging direction and outputs the camera metadata to the information processing device,
the recognition unit detects a deviation of the imaging direction included in the camera metadata based on the captured image, and
the recognition metadata includes data based on the detected deviation of the imaging direction.

8. The information processing system according to claim 7, wherein

the recognition metadata generation unit generates the recognition metadata including data used for correcting the reference direction based on the detected deviation of the imaging direction, and
the imaging direction detection unit corrects the reference direction based on the recognition metadata.

9. An information processing method allowing an information processing device that controls an imaging device that captures a captured image to execute:

performing recognition processing on the captured image;
generating recognition metadata including data based on a result of the recognition processing; and
outputting the recognition metadata to the imaging device.

10. An information processing system comprising:

an imaging device that captures a captured image; and
an information processing device that controls the imaging device, wherein
the information processing device includes:

a recognition unit that performs recognition processing on the captured image;
a recognition metadata generation unit that generates recognition metadata including data based on a result of the recognition processing; and
an output unit that outputs the recognition metadata to a device in a subsequent stage.

11. The information processing system according to claim 10, wherein

the recognition unit performs at least one of subject recognition and region recognition in the captured image, and
the recognition metadata includes at least one of a result of the subject recognition and a result of the region recognition.

12. The information processing system according to claim 11, further comprising:
a masking processing unit that performs masking processing on a masking region, which is a region other than a region of a subject of a predetermined type in the captured image, and outputs the captured image after the masking processing to the device in the subsequent stage.

13. The information processing system according to claim 12, wherein
the masking processing unit reduces a chroma component of the masking region and compresses a contrast of a luminance component of the masking region.

14. The information processing system according to claim 10, wherein
the output unit adds at least a part of the recognition metadata to an output signal containing the captured image, and outputs the output signal to the device in the subsequent stage.

15. The information processing system according to claim 14, wherein
the imaging device includes:

a camera metadata generation unit that generates camera metadata including a detection result of the imaging direction of the imaging device and outputs the camera metadata to the information processing device, and
the output unit further adds at least a part of the camera metadata to the output signal.

16. The information processing system according to claim 15, wherein
the camera metadata further includes at least one of control information of the imaging device and lens information regarding a lens of the imaging device.

17. An information processing method allowing an information processing device that controls an imaging device that captures a captured image to execute:

performing recognition processing on the captured image;
generating recognition metadata including data based on a result of the recognition processing; and
outputting the recognition metadata to a device in a subsequent stage.

18. An information processing device comprising:

a recognition unit that performs recognition processing on a captured image captured by an imaging device;
a recognition metadata generation unit that generates recognition metadata including data based on a result of the recognition processing; and
an output unit that outputs the recognition metadata.

19. The information processing device according to claim 18, wherein
the output unit outputs the recognition metadata to the imaging device.

20. The information processing device according to claim 18, wherein
the output unit outputs the recognition metadata to a device in a subsequent stage.

Fig. 1

Fig. 2

33

CPU

71

CONTROL UNIT

72

IMAGING
DIRECTION
DETECTION UNIT

73

CAMERA
METADATA
GENERATION UNIT

74

DISPLAY
CONTROL UNIT

Fig. 3

52

CPU

101

CONTROL UNIT

102

METADATA
OUTPUT UNIT

Fig. 4

53

INFORMATION
PROCESSING UNIT

131

RECOGNITION
UNIT

132

RECOGNITION
METADATA
GENERATION UNIT

Fig. 5

START FOCUS INDEX
DISPLAY PROCESSING

S1
PERFORM IMAGING PROCESSING

S2
PERFORM SUBJECT PROCESSING

S3
CALCULATE FOCUS INDEX VALUE

S4
GENERATE RECOGNITION METADATA

S5
DISPLAY FOCUS INDEX

Fig. 6

Fig. 7

```
        ╭─────────────────────────╮
        │     START PEAKING       │
        │ HIGHLIGHTING PROCESSING │
        ╰─────────────────────────╯
                      │
   ┌──────────────────┤
   │                  ▼          S21
   │      ┌───────────────────────────┐
   │      │ PERFORM IMAGING PROCESSING │
   │      └───────────────────────────┘
   │                  │
   │                  ▼          S22
   │      ┌───────────────────────────┐
   │      │ PERFORM SUBJECT RECOGNITION │
   │      └───────────────────────────┘
   │                  │
   │                  ▼          S23
   │      ┌───────────────────────────┐
   │      │ GENERATE RECOGNITION METADATA │
   │      └───────────────────────────┘
   │                  │
   │                  ▼          S24
   │      ┌───────────────────────────┐
   │      │ PERFORM PEAKING HIGHLIGHTING │
   │      │      BY LIMITING REGION      │
   │      └───────────────────────────┘
   │                  │
   └──────────────────┘
```

Fig. 8

A

B

Fig. 9

```
                    ┌─────────────────────────┐
                    │   START VIDEO MASKING    │
                    │       PROCESSING         │
                    └─────────────────────────┘
                                 │
                                 │              S41
    ┌──────────────┐   ┌─────────────────────────────────┐
    │              │   │   PEFORM IMAGING PROCESSING     │
    │              │   └─────────────────────────────────┘
    │              │                │
    │              │                │           S42
    │              │   ┌─────────────────────────────────┐
    │              │   │    PERFORM REGION RECOGNITION    │
    │              │   └─────────────────────────────────┘
    │              │                │
    │              │                │           S43
    │              │   ┌─────────────────────────────────┐
    │              │   │  GENERATE RECOGNITION METADATA   │
    │              │   └─────────────────────────────────┘
    │              │                │
    │              │                │           S44
    │              │   ┌─────────────────────────────────┐
    │              │   │   PERFORM MASKING PROCESSING     │
    │              │   └─────────────────────────────────┘
    │              │                │
    │              │                │           S45
    │              │   ┌─────────────────────────────────┐
    │              │   │   DISPLAY VIDEO AND WAVEFORM     │
    │              │   │   AFTER MASKING PROCESSING       │
    │              │   └─────────────────────────────────┘
    │              │                │
    └──────────────┴────────────────┘
```

Fig. 10

EP 4 319 131 A1

Fig. 11

Fig. 12

Fig. 13

Fig. 14

A

B

Fig. 15

A

B

Fig. 16

Fig. 17

```
            ╭─────────────────────────╮
            │   START REFERENCE       │
            │ DIRECTION CORRECTION    │
            │     PROCESSING          │
            ╰─────────────────────────╯
                        │
                        │              S61
                        ▼
            ┌─────────────────────────┐
            │ START IMAGING PROCESSING │
            └─────────────────────────┘
                        │
                        │              S62
                        ▼
            ┌─────────────────────────────┐
            │ START PROCESSING OF EMBEDDING│
            │ VIDEO FRAME AND METADATA IN  │
            │ OUTPUT SIGNAL AND OUTPUTTING │
            │        OUTPUT SIGNAL         │
            └─────────────────────────────┘
                        │
                        │              S63
                        ▼
            ┌─────────────────────────────┐
            │ START UPDATING FEATURE POINT │
            │            MAP               │
            └─────────────────────────────┘
                        │
        ┌──────────────▶│              S64
        │               ▼
        │   ┌─────────────────────────────┐
        │   │  DETECT DEVIATION OF IMAGING │
        │   │         DIRECTION            │
        │   └─────────────────────────────┘
        │               │
        │               │              S65
        │               ▼
        │   ┌─────────────────────────────┐
        │   │ GENERATE RECOGNITION METADATA│
        │   └─────────────────────────────┘
        │               │
        │               │              S66
        │               ▼
        │   ┌─────────────────────────────┐
        │   │  CORRECT REFERENCE DIRECTION │
        │   └─────────────────────────────┘
        │               │
        └───────────────┘
```

Fig. 18

Fig. 19

0 DEGREES

Fig. 20

−7 DEGREES

Fig. 21

```
        ╭─────────────────────────────╮
        │   START SUBJECT RECOGNITION  │
        │   AND EMBEDDING PROCESSING   │
        ╰─────────────────────────────╯
                        │
    ┌──────────────────▶│          S81
    │   ┌───────────────▼───────────────┐
    │   │  PERFORM IMAGING PROCESSING   │
    │   └───────────────────────────────┘
    │                   │          S82
    │   ┌───────────────▼───────────────┐
    │   │  PERFORM SUBJECT RECOGNITION  │
    │   └───────────────────────────────┘
    │                   │          S83
    │   ┌───────────────▼───────────────┐
    │   │ GENERATE RECOGNITION METADATA │
    │   └───────────────────────────────┘
    │                   │          S84
    │   ┌───────────────▼───────────────┐
    │   │    EMBED VIDEO FRAME AND       │
    │   │ METADATA IN OUTPUT SIGNAL AND  │
    │   │     OUTPUT OUTPUT SIGNAL       │
    │   └───────────────────────────────┘
    │                   │
    └───────────────────┘
```

Fig. 22

Mountain

Golf
club

Ball

T-shot

Person

Fig. 23

EP 4 319 131 A1

## INTERNATIONAL SEARCH REPORT

| International application No. |
|---|
| **PCT/JP2022/002504** |

### A. CLASSIFICATION OF SUBJECT MATTER

*H04N 5/232*(2006.01)i; *G03B 15/00*(2021.01)i; *G03B 17/18*(2021.01)i; *G03B 17/24*(2021.01)i; *G06T 5/00*(2006.01)i; *G06T 7/194*(2017.01)i; *G06T 7/70*(2017.01)i; *H04N 5/77*(2006.01)i; *H04N 5/92*(2006.01)i
FI: H04N5/232 300; G03B15/00 Q; G03B17/18 Z; G03B17/24; G06T5/00 735; G06T7/194; G06T7/70 B; H04N5/232 290; H04N5/232 939; H04N5/77; H04N5/92 010

According to International Patent Classification (IPC) or to both national classification and IPC

### B. FIELDS SEARCHED

Minimum documentation searched (classification system followed by classification symbols)

H04N5/232; G03B15/00; G03B17/18; G03B17/24; G06T5/00; G06T7/194; G06T7/70; H04N5/77; H04N5/92

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-156054 A (CANON KK) 27 August 2015 (2015-08-27) paragraphs [0012], [0013], [0055], [0061]-[0066], fig. 1, 12, 14 | 10-18, 20 |
| A | | 1-9, 19 |
| Y | JP 2015-233261 A (CANON KK) 24 December 2015 (2015-12-24) paragraphs [0031]-[0036], [0038]-[0045], fig. 7-9 | 1-3, 6, 9-13, 17-20 |
| A | | 4, 5, 7, 8, 14-16 |
| Y | JP 2000-113097 A (RICOH CO LTD) 21 April 2000 (2000-04-21) abstract | 1-3, 6, 9-13, 17-20 |
| Y | JP 2015-049294 A (RICOH IMAGING CO LTD) 16 March 2015 (2015-03-16) paragraph [0089] | 6 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **08 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/002504**

| Patent document cited in search report | | | Publication date (day/month/year) | Patent family member(s) | Publication date (day/month/year) |
|---|---|---|---|---|---|
| JP | 2015-156054 | A | 27 August 2015 | US 2015/0234865 A1 paragraphs [0035]-[0037], [0091], [0098]-[0104], fig. 1, 12, 14 | |
| JP | 2015-233261 | A | 24 December 2015 | (Family: none) | |
| JP | 2000-113097 | A | 21 April 2000 | (Family: none) | |
| JP | 2015-049294 | A | 16 March 2015 | (Family: none) | |

Form PCT/ISA/210 (patent family annex) (January 2015)

**REFERENCES CITED IN THE DESCRIPTION**

**Patent documents cited in the description**

- JP 2020141946 A
- JP 2020156860 A